# EUROPÄISCHE PATENTSCHRIFT

(11) **EP 0 394 500 B1**
(45) Veröffentlichungstag und Bekanntmachung des Hinweises auf die Patenterteilung: **17.03.1993**
(21) Anmeldenummer: 89106819.9
(22) Anmeldetag: 17.04.1989
(51) Int. Cl.: C04B 35/10, C01F 7/02, C09K 3/14

(54) **Verfahren zur Herstellung von alpha-A1203-Sinterkörpern**
Process for the production of sintered alpha-alumina bodies
Procédé pour la préparation de corps frittes en alumine alpha

(43) Veröffentlichungstag der Anmeldung: 31.10.1990
(73) Patentinhaber: H.C. Starck GmbH & Co. KG, 38642 Goslar (DE)
(72) Erfinder: Möltgen, Paul, Dr., D-7887 Laufenburg (DE)
(74) Vertreter: Steiling, Lothar, Dr.

(56) Entgegenhaltungen:
- EP-A- 0 227 374
- US-A- 2 915 365
- US-A- 3 226 191
- US-A- 4 797 139

## Beschreibung

Die vorliegende Erfindung betrifft ein Verfahren zur Herstellung von α-Al₂O₃-Sinterkörpern, wobei ein Al₂O₃-Ausgangsmaterial einer hydrothermalen Behandlung in Gegenwart katalytischer Säuremengen unterzogen wird, das so erhaltene Produkt getrocknet, calziniert und gesintert wird.

Eine bevorzugte Anwendung von α-Al₂O₃-Sinterkörpern ist deren Einsatz als Schleifmittel.

Neben geschmolzenen Korundschleifmitteln sind solche aus gesintertem Material schon seit ca. 50 Jahren bekannt. In der neueren Zeit wurden gesinterte Schleifmittel auf α-Al₂O₃-Basis bekannt, deren mikrokristalline Struktur besondere schleiftechnische Vorteile mit sich brachte.

So wird in der US-A-4 314 827 ein mikrokristallines Schleifmaterial beschrieben, das über die Sol-Gel-Technik bei Sintertemperaturen von ca. 1400°C hergestellt wird. Als Sinterhilfe wird eine modifizierende Komponente wei HfO₂, ZrO₂, MgO, ZnO, CoO, NiO u.a. zugesetzt.

In der EP-A-0 152 768 wird ein Schleifmaterial offenbart, welches ebenfalls durch Sintern eines Aluminiumoxidhydratgels hergestellt wird. Als Keimbildner werden hier zur Herabsetzung der Umwandlungstemperatur von ν-Al₂O₃ in α-Al₂O₃ feinste α-Al₂O₃-Teilchen zugesetzt. Weitere Zusätze von Kristallwachstumshemmern wie MgO, SiO₂, Cr₂O₃, Fe₂O₃, ZrO₂ können ebenfalls verwendet werden.

Ähnliche Verfahren und Stoffe gehen aus den DE-A-0 024 099, DE-A-3 219 607, US-A-4 518 397, US-A-4 574 003, US-A-4 623 364, EP-A-0 168 606, EP-A-0 200 487, EP-A-0 228 856, EP-A-0 209 084 und EP-A-0 263 810 hervor.

Allen vorgenannten Verfahren ist gemeinsam, daß sie über ein Sol-Gel-Verfahren mit feinstdispersem Aluminiumoxidmonohydrat vom Typ des Böhmits durchgeführt werden. Die verhältnismäßig teuren Rohstoffe, welche zum Beispiel über die Hydrolyse von Aluminium-organischen Verbindungen gewonnen werden, und die aufwendige Verfahrenstechnik lassen die Kosten des Sol-Gel-Korundes auf ein Vielfaches der herkömmlichen Korunde ansteigen.

In der US-A-4 797 139 wird ein Verfahren beschrieben, Aluminiumhydroxid in unter hydrothermalen Bedingüngen Gegenwart katalytischer Säuremengen in mikrokristallinen Böhmit umzusetzen, der als Ausgangsstoff für die Herstellung von alpha-Al₂O₃-Sinterkorpern eingesetzt werden kann.

In der DE-C-3 604 848 wird ein Verfahren beschrieben, eine Dispersion aus tonerdehaltigen Rohstoffen, kieselsäurehaltigen Verbindungen und weiteren Zusätzen (Verbindungen der Metalle Co, Ni, Cr, Zr, Zn, Si, Ti oder Ni) zu einem sinterfähigen Schlicker zu vermahlen, aus dem durch stufenweises Trocknen und Sintern bei Temperaturen bis 1700°C ein Schleifmittel hergestellt werden kann, dessen Korundkristalle einen Durchmesser von weniger als 5 µ haben. Es gelingt zwar so, den teuren Rohstoff zu umgehen, allerdings ist man immer noch auf sehr aufwendige Mahlprozesse und hohe Sintertemperaturen angewiesen, um zu dem gewünschten mikrokristallinen Schleifmittel zu gelangen.

Das so erhaltene Produkt enthält außerdem ca. 2 % Silikate, die schleifleistungsmäßig keinen Wert besitzen, und hat mit einer Kristallitgröße kleiner 5 µ immer noch nicht die Feinstruktur eines Stoffes, der über die Sol-Gel-Methode hergestellt wurde (Kristallitgröße kleiner 0,4 µ).

In der Submicron-Struktur wird aber eine Ursache für die besonderen schleiftechnischen Vorteil dieser neuen Schleifmittel gesehen.

Aufgabe der Erfindung ist es, ein Verfahren zur Herstellung eines gesinterten mikrokristallinen α-Al₂O₃-Sinterkörpers (Submicron) über einen kostengünstigen Rohstoff aufzuzeigen, welches die beschriebenen Nachteile der Verfahren des Standes der Technik nicht aufweist.

Es wurde nun gefunden, daß diese Anforderungen erfüllt werden, wenn als Ausgangsmaterial chi-Al₂O₃ eingesetzt wird.

Gegenstand dieser Erfindung ist also ein Verfahren zur Herstellung von α-Al₂O₃-Sinterkörpern, wobei ein α-Al₂O₃-Ausgangsmaterial einer hydrothermalen Behandlung in Gegenwart katalytischer Säuremengen unterzogen wird, das so erhaltene Produkt getrocknet, calziniert und gesintert wird, wobei als α-Al₂O₃-Ausgangsmaterial chi-Al₂O₃ eingesetzt wird und dem nach der hydrothermalen Behandlung erhaltenen Produkt Sinteradditive zugesetzt werden.

Bevorzugt wird das chi-Al₂O₃ gemäß der DE-C-2 059 946 hergestellt. Hiernach wird das chi-Al₂O₃ durch Stoßerhitzen in der sogenannten Schoppe-Kammer aus Aluminiumtrihydrat (Hydrargillit) hergestellt. Das so erhaltene aktive Oxid, das vollkommen böhmitfrei ist und eine Oberfläche von 300 m² /g BET (gemessen nach der 1-Punkt-Stickstoff-Methode) aufweist, wird bevorzugt im Autoklaven als wäßrige salpetersaure Aufschlämmung zu einer hochviskosen Masse umgesetzt.

Besonders gute Ergebnisse werden erzielt, wenn die hydrothermale Behandlung bei Temperaturen zwischen 150 und 250°C eine halbe Stunde bis 5 Stunden lang durchgeführt wird. Diese Masse wird getrocknet. Bevorzugt schließt sich dem Trockenschritt ein Feinmahlung, bevorzugt auf eine Korngröße von <1 µm an. Besonders gute Ergebnisse werden erzielt, wenn vor der Calzinierung ein Preßvorgang durchgeführt wird. Der erfindungsgemäße Zusatz der Sinteradditive erfolgt spätestens vor diesem Preßvorgang.

Erfindungsgemäß beträgt die Menge der Sinteradditive 0,2 bis 10 Gew.-%, bevorzugt 0,5 bis 2 Gew.-%. Sinteradditive im Sinne dieser Erfindung sind Metalloxide, bevorzugt Spinelle oder während der Reaktionsbedingungen Spinelle bildende Metallverbindungen. Entsprechende Sinteradditive sind z.B. in der EP-A-0 200 487 offenbart.

In einer bevorzugten Variante des erfindungsgemäßen Verfahrens werden α-Al₂O₃-Keime eingesetzt.

Als Säure während der hydrothermalen Behandlung eignet sich besonders HNO₃. Die abschließende Sinterung der Produkte wird erfindfungsgemäß bei Temperaturen zwischen 1200 und 1600°C, vorzugsweise 1300 bis 1380°C, durchgeführt. Es ist weiterhin bevorzugt, die Sinterung und die Calzinierung in einem Schritt durchzuführen.

Nach dem erfindungsgemäßen Verfahren gelingt es, α-Al₂O₃-Sinterkörper mit einer Dichte >95 % der theoretischen Dichte und einer Härte im Bereich von 16 bis 22 GPa herzustellen, deren Kristallitstruktur im Submicron-Bereich liegt.

Im folgenden wird die Erfindung beispielhaft erläutert, ohne daß hierin eine Einschränkung zu sehen ist.

### Beispiel 1

750 g chi-Al₂O₃ werden in 3 l destilliertem Wasser mit 150 ml konz. Salpetersäure eine Stunde im Autoklaven bei 200°C und 20 bar gerührt. Der entstandene hochviskose Stoff wird im Trockenschrank bei 80°C getrocknet, anschließend vermahlen, mit 7 g α-Al₂O₃ (Korngröße <1 µ) als Sinterhilfe vermischt und zu Tabletten verpreßt. Die Preßlinge werden innerhalb von 6 Stunden auf 1350°C aufgeheizt und bei dieser Temperatur ca. 5 Stunden gesintert.

Eigenschaften des so gewonnenen Stoffes:
- Härte:: 21 GPa
- Dichte:: 98 % der Theorie
- Kristallitgröße:: kleiner 1 µm

### Beispiel 2

Wie Beispiel 1 werden die Preßlinge zunächst bei Temperaturen bis 700°C calziniert, anschließend zerkleinert und dann bei 1350°C gesintert.

Eigenschaften des so gewonnenen Stoffes:
- Härte:: 20 GPa
- Dichte:: 98,2 % der Theorie
- Kristallitgröße:: kleiner 1 µm

## Patentansprüche

1. Verfahren zur Herstellung von α-Al₂O₃-Sinterkörpern, wobei ein Al₂O₃-Ausgangsmaterial einer hyrothermalen Behandlung in Gegenwart katalytischer Säuremengen unterzogen wird, das so erhaltene Produkt getrocknet, calziniert und gesintert wird, dadurch gekennzeichnet, daß als Al₂O₃-Ausgangsmaterial chi-Al₂O₃ eingesetzt wird und dem nach der hydrothermalen Behandlung erhaltenen Produkt Sinteradditive zugesetzt werden.

2. Verfahren gemäß Anspruch 1, dadurch gekennzeichnet, daß die hydrothermale Behandlung bei Temperaturen zwischen 150 und 250°C eine halbe Stunde bis 5 Stunden lang durchgeführt wird.

3. Verfahren gemäß einem der Ansprüche 1 oder 2, dadurch gekennzeichnet, daß sich nach dem Trockenschritt eine Feinmahlung, bevorzugt auf eine Korngröße von <1 µm, anschließt.

4. Verfahren gemäß einem oder mehreren der Ansprüche 1 bis 3, dadurch gekennzeichnet, daß vor der Calzinierung ein Preßvorgang durchgeführt wird.

5. Verfahren gemäß einem oder mehreren der Ansprüche 1 bis 4, dadurch gekennzeichnet, daß die Zugabe der Sinteradditive spätestens vor dem Preßvorgang erfolgt.

6. Verfahren gemäß einem oder mehreren der Ansprüche 1 bis 5, dadurch gekennzeichnet, daß die Menge der Sinteradditive 0,2 bis 10 Gew.-%, bevorzugt 0,5 bis 2 Gew.-%, beträgt.

7. Verfahren gemäß einem oder mehreren der Ansprüche 1 bis 6, dadurch gekennzeichnet, daß die Sinteradditive Metalloxide, bevorzugt Spinelle oder während der Reaktionsbedingungen Spinelle bildende Metallverbindungen, sind.

8. Verfahren gemäß einem oder mehreren der Ansprüche 1 bis 6, dadurch gekennzeichnet, daß als Sinteradditiv α-Al₂O₃ eingesetzt wird.

9. Verfahren gemäß einem oder mehreren der Ansprüche 1 bis 8, dadurch gekennzeichnet, daß als Säure HNO₃ eingesetzt wird.

10. Verfahren gemäß einem oder mehreren der Ansprüche 1 bis 9, dadurch gekennzeichnet, daß abschließend eine Sinterung bei Temperaturen zwischen 1200 und 1600°C, vorzugsweise 1300 bis 1380°C, durchgeführt wird.

11. Verfahren gemäß einem oder mehreren der Ansprüche 1 bis 10, dadurch gekennzeichnet, daß die Sinterung und die Calzinierung in einem Schritt durchgeführt werden.

## Claims

1. A process for production of alpha-Al₂O₃ sintered bodies, wherein an Al₂O₃ starting material is subjected to a hydrothermal treatment in the presence of catalytic amounts of acid and the product so obtained is dried, calcined and sintered, characterized in that chi-Al₂O₃ is used as the Al₂O₃ starting material and sintering additives are added to the product obtained after the hydrothermal treatment.

2. A process according to claim 1, characterized in that the hydrothermal treatment is carried out for half an hour to 5 hours at temperatures between 150 and 250 °C.

3. A process according to one of claims 1 or 2, characterized in that the drying stage is followed by a fine grinding, preferably to a particle size of <1 µm.

4. A process according to one or more of claims 1 to 3, characterized in that before the calcination a pressing operation is carried out.

5. A process according to one or more of claims 1 to 4, characterized in that the addition of the sintering additives occurs at the latest before the pressing operation.

6. A process according to one or more of claims 1 to 5, characterized in that the amount of the sintering additives is 0.2 to 10 wt%, preferably 0.5 to 2 wt%.

7. A process according to one or more of claims 1 to 6, characterized in that the sintering additives are metal oxides, preferably spinels or metal compounds forming spinels under the reaction conditions.

8. A process according to one or more of claims 1 to 6, characterized in that α-Al₂O₃ is used as the sintering additive.

9. A process according to one or more of claims 1 to 8, characterized in that HNO₃ is used as the acid.

10. A process according to one or more of claims 1 to 9, characterized in that the final sintering is carried out at temperatures between 1200 and 1600 °C, preferably 1300 to 1380 °C.

11. A process according to one or more of claims 1 to 10, characterized in that the sintering and the calcination are carried out in one step.

## Revendications

1. Procédé de production de corps frittés en alumine α, dans lequel une matière de départ à base de Al₂O₃ est exposée à un traitement hydrothermique en présence de quantités catalytiques d'acide, le produit ainsi obtenu étant séché, calciné et fritté, caractérisé en ce que la matière de départ à base de Al₂O₃ consiste en chi-Al₂O₃ et des additifs de frittage sont ajoutés au produit obtenu après le traitement hydrothermique.

2. Procédé suivant la revendication 1, caractérisé en ce que le traitement hydrothermique est conduit à des températures comprises entre 150 et 250°C pendant une durée allant d'une demi-heure à 5 heures.

3. Procédé suivant l'une des revendications 1 et 2, caractérisé en ce que l'étape de séchage est suivie d'un broyage fin, de préférence en particules de diamètre inférieur à 1 µm.

4. Procédé suivant une ou plusieurs des revendications 1 à 3, caractérisé en ce qu'une opération de pressage est effectuée avant la calcination.

5. Procédé suivant une ou plusieurs des revendications 1 à 4, caractérisé en ce que l'addition des additifs de frittage est effectuée au plus tard avant l'opération de pressage.

6. Procédé suivant une ou plusieurs des revendications 1 à 5, caractérisé en ce que la quantité d'additifs de frittage va de 0,2 à 10 % en poids, de préférence de 0,5 à 2 % en poids.

7. Procédé suivant une ou plusieurs des revendications 1 à 6, caractérisé en ce que les additifs de frittage sont des oxydes métalliques, de préférence des spinelles ou des composés métalliques formant des spinelles pendant les conditions réactionnelles.

8. Procédé suivant une ou plusieurs des revendications 1 à 6, caractérisé en ce qu'on utilise de l'alumine α comme additif de frittage.

9. Procédé suivant une ou plusieurs des revendications 1 à 8, caractérisé en ce qu'on utilise du HNO₃ comme acide.

10. Procédé suivant une ou plusieurs des revendications 1 à 9, caractérisé en ce qu'on effectue en dernier lieu un frittage à des températures comprises entre 1200 et 1600°C, de préférence entre 1300 et 1380°C.

11. Procédé suivant une ou plusieurs des revendications 1 à 10, caractérisé en ce que le frittage et la calcination sont effectués en une seule étape.
